# EUROPÄISCHE PATENTSCHRIFT

(11) **EP 2 177 381 B1**
(45) Veröffentlichungstag und Bekanntmachung des Hinweises auf die Patenterteilung: **21.10.2015**
(21) Anmeldenummer: 09009462.4
(22) Anmeldetag: 22.07.2009
(51) Int. Cl.: B60G 17/052

(54) **Ventileinrichtung für eine Luftfederungsanlage**
Valve device for a pneumatic suspension assembly
Ensemble de clapets pour un système de suspension pneumatique

(30) Priorität: 14.10.2008 DE 102008051203
(43) Veröffentlichungstag der Anmeldung: 21.04.2010
(73) Patentinhaber: WABCO GmbH, 30453 Hannover (DE)
(72) Erfinder: Buczylko, Piotr, 50039 Wroclaw (PL); Gorczyca, Sven, 30419 Hannover (DE); Mikolajczyk, Lukasz, 51639 Wroclaw (PL); Trambauer, Alexander, 30966 Hemmingen (DE); Trela, Marcin, 57100 Strzelin (PL); Weihe, Ulrich, 30826 Garbsen (DE)
(74) Vertreter: Lauerwald, Jörg

(56) Entgegenhaltungen:
- EP-A- 1 039 147
- EP-A- 1 266 775
- EP-A- 1 382 469
- EP-A- 1 712 380
- EP-A- 1 826 034
- DE-A1-102004 035 691
- DE-A1-102007 005 980

## Beschreibung

Die Erfindung betrifft eine Ventileinrichtung für eine Luftfederungsanlage in einem Fahrzeug gemäß den Merkmalen des Patentanspruchs 1.

Derartige Ventileinrichtungen dienen zur Steuerung der Druckluftmenge in Luftfederbälgen der Luftfederungsanlage und damit der Einstellung der Niveaulage des Fahrzeugaufbaus gegenüber dem Fahrwerk. Eine Verringerung oder Erhöhung der Druckluftmenge in den Luftfederbälgen wird im Rahmen einer elektronischen Niveauregelung von einer elektronischen Steuereinrichtung automatisch gemäß einem erkannten Regelungsbedarf durchgeführt. Zusätzlich ist es erforderlich, beispielsweise beim Be- und Entladen eines Fahrzeuges, durch manuelle Betätigung die Druckluftmenge in den Luftfederbälgen zu erhöhen oder zu verringern, um das Fahrzeugniveau z. B. an das Niveau einer Laderampe anzupassen. Hierfür war es bisher üblich, separate Ventileinrichtungen für die elektronisch gesteuerte Niveauregelung und für die manuelle, willkürliche Niveauverstellung zu verwenden. Für die manuelle Verstellung sind bisher sogenannte Drehschieberventile weit verbreitet. Aus der DE 10 2004 035 691 A1 ist der Vorschlag bekannt, die von der elektronisch gesteuerten Niveauregelung verwendete Ventileinrichtung mit einer manuellen Betätigung zu kombinieren.

EP 1 382 469 A2 offenbart ein Magnetventil für Nutzfahrzeuge mit Luftfederung mit mindestens zwei Anschlüssen, einer Spule und einem in der Spule geführten Anker, der mit einem Ventilkörper verbunden ist, der über die Bewegung des Ankers gegenüber mindestens einem dem Ventilkörper zugeordneten Ventilsitz steuerbar ist, wobei der Anker entsprechend dem Durchmesser des Ventilsitzes druckentlastet ausgebildet ist. Ein manuell betätigbarer Stößel ist zum willkürlichen Betätigen des zwischen dem Ventilkörper und dem Ventilsitz gebildeten Ventils vorgesehen.

Der vorliegenden Erfindung liegt demgegenüber die Aufgabe zugrunde, eine Ventileinrichtung mit einem erhöhten Bedienkomfort anzugeben.

Diese Aufgabe wird durch die in dem Patentanspruch 1 angegebene Erfindung gelöst. Vorteilhafte Weiterbildungen der Erfindung sind in den Unteransprüchen angegeben.

Sofern im Rahmen dieser Anmeldung von Elementen wie z.B. einem Luftfederbalg, einem Druckluftanschluss oder einer Druckluftleitung in der Einzahl gesprochen wird, schließt dies eine Mehrzahl solcher Elemente mit ein, wie z.B. eine Anordnung von Luftfederbälgen, Druckluftanschlüssen oder Druckluftleitungen.

Die erfindungsgemäße Ventileinrichtung weist zumindest drei Betriebsstellungen auf, nämlich eine Heben-Stellung, eine Senken-Stellung sowie eine Neutralstellung. In der Heben-Stellung werden die angeschlossenen Luftfederbälge mit Druckluft befüllt. In der Senken-Stellung wird Druckluft aus den angeschlossenen Luftfederbälgen abgelassen. In der Neutralstellung sind die Luftfederbälge von dem Druckluftvorrat und dem Entlüftungsanschluss getrennt, d. h. die Druckluftmenge in den Luftfederbälgen wird gehalten.

Die Erfindung erhöht den Bedienkomfort der Ventileinrichtung bei manueller Bedienung, indem eine Rasteinrichtung vorgesehen ist, mittels der das manuelle Bedienelement in wenigstens einer Stellung verrastbar ist. Hierdurch ist es möglich, das manuelle Bedienelement in der Heben-Stellung und/oder der Senken-Stellung verrastbar zu machen. Hierdurch muss das manuelle Bedienelement während des Heben- und/oder des Senken-Vorgangs nicht vom Bediener permanent festgehalten werden. Insbesondere bei selbstrückstellend ausgebildeten Ventileinrichtungen, d.h. solchen Ausführungen, bei denen das manuelle Bedienelement zumindest in einer Betätigungsrichtung gegen die Kraft einer Rückstellfeder betätigbar ist, bewirkt die Rasteinrichtung eine Entlastung des Bedieners. Aber auch bei nicht- selbstrückstellend ausgebildeten Ventileinrichtungen wäre ohne die Rasteinrichtung aus Sicherheitsgründen eine manuelle Fixierung des Bedienelements vonnöten. Daher ist durch die Einführung der Rasteinrichtung die manuelle Bedienung der Ventileinrichtung für den Bediener angenehmer durchzuführen.

Ein weiterer Vorteil besteht in einer Zeiteinsparung beim Be- und Entladen eines Fahrzeuges. Da ein Senken-Vorgang bei einem schweren Nutzfahrzeug typischerweise bis zu 2 Minuten dauern kann, können mit Hilfe der erfindungsgemäßen Ventileinrichtung die mit dem Entladen des Nutzfahrzeugs verbundenen Vorgänge nun zügiger und flüssiger durchgeführt werden. So kann bei Verwendung der erfindungsgemäßen Ventileinrichtung der Fahrer während des Senkvorgangs beispielsweise bereits die Plane des Nutzfahrzeugs lösen. Die hiermit einhergehende Arbeitszeiteinsparung führt zu einer nennenswerten Rationalisierung und Kosteneinsparung bei Anwendern der erfindungsgemäßen Ventileinrichtung, wie etwa bei Speditionen.

Die Rasteinrichtung kann vorteilhaft so ausgelegt sein, dass die Rastwirkung durch die manuelle Bedienkraft überwunden werden, d. h. ein beispielsweise in der Senken-Stellung verrastetes manuelles Bedienelement kann von dem Bediener manuell mit etwas erhöhtem Kraftaufwand in die Neutralstellung gebracht werden.

Gemäß einer vorteilhaften Weiterbildung der Erfindung ist die Rasteinrichtung entriegelbar ausgebildet, derart, dass die Ventileinrichtung eine Entriegelungseinrichtung zur Entriegelung der Rasteinrichtung aufweist. Die Entriegelungseinrichtung kann vorteilhaft nicht-manuell betätigbar ausgebildet sein, beispielsweise kann die Entriegelungseinrichtung durch ein elektrisches oder pneumatisches Signal betätigbar sein, das auf einen Elektromagneten bzw. einem Druckluftkolben wirkt. Auch eine Kombination als elektropneumatisch ausgebildete Entriegelungseinrichtung ist vorteilhaft.

Diese Weiterbildung der Erfindung hat den Vorteil, dass eine selbstrückstellend ausgeführte Ventileinrichtung durch ein externes Signal, beispielsweise von einer elektronischen Steuereinrichtung ausgelöst, automatisch in die Neutralstellung stellbar ist, wenn sie zuvor infolge einer Verrastung des manuellen Bedienelements über die Rasteinrichtung in der Heben-Stellung oder der Senken-Stellung arretiert war. Hierdurch kann die Sicherheit beim Betrieb eines mit der erfindungsgemäßen Ventileinrichtung ausgestatteten Fahrzeugs erhöht werden, da ein versehentliches Vergessen der Rückstellung der Ventileinrichtung in die Neutralstellung beim Beenden des Be- oder Entladevorgangs vermieden werden kann. Vorteilhaft kann beispielsweise durch die elektronische Steuereinrichtung die Geschwindigkeit des Fahrzeugs überwacht werden. Sobald die elektronische Steuereinrichtung erkennt, dass das Fahrzeug nicht mehr im Stillstand ist bzw. eine gewisse Fahrgeschwindigkeit erreicht hat, kann mittels des elektrischen oder pneumatischen Signals die Entriegelungseinrichtung betätigt werden, so dass die Rasteinrichtung entriegelt wird und das manuelle Betätigungselement freigegeben wird. Hierdurch kann die Ventileinrichtung in die Neutralstellung verbracht werden.

Gemäß einer vorteilhaften Weiterbildung der Erfindung weist die Ventileinrichtung eine Entriegelungseinrichtung auf, die bei einer Betätigung des nicht-manuellen Betätigungselements betätigt wird und hierdurch die Rasteinrichtung entriegelt. Durch eine solche feste Ankopplung der Betätigung der Entriegelungseinrichtung an die Betätigung des nicht-manuellen Betätigungselements kann ein Konflikt zwischen der über das manuelle Bedienelement und der über das nicht-manuelle Betätigungselement ausgewählten Betriebsstellung der Ventileinrichtung vermieden werden. Als Konflikt wird in diesem Zusammenhang verstanden, wenn über das manuelle Bedienelement eine andere Betriebsstellung ausgewählt wird als über das nicht-manuelle Betätigungselement, etwa wenn das eine Element die Heben-Stellung anfordert, während das andere Element die Senken-Stellung anfordert.

Gemäß vorteilhafter Weiterbildungen der Erfindung kann die Entriegelungseinrichtung einen Elektromagneten, ein Pneumatikventil oder eine Kombination von beidem aufweisen. Vorteilhaft ist z. B. eine direkt elektromagnetisch wirkende Entriegelungseinrichtung, da hierbei keine zusätzliche Druckluft erforderlich ist und entsprechende druckluftbetätigbare Bauteile entfallen können. Vorteilhaft ist auch eine Variante, bei der die Entriegelungseinrichtung einen mit Druckluft betätigbaren Kolben aufweist. Die Entriegelung kann dann durch ein in der Ventileinrichtung ohnehin vorhandenes Drucksignal, beispielsweise gesteuert von dem nicht-manuellen Betätigungselement, betätigt werden. Vorteilhaft ist auch eine Beaufschlagung des druckluftbetätigbaren Kolbens der Entriegelungseinrichtung über ein von außen an die Ventileinrichtung herangeführtes Drucksignal. Vorteilhaft ist ferner eine Entriegelungseinrichtung, die einen über einen Elektromagneten betätigbares Pneumatikventil aufweist, das den mit Druckluft betätigbaren Kolben mit Druckluft beaufschlagt.

Gemäß einer vorteilhaften Weiterbildung der Erfindung ist das nicht-manuelle Betätigungselement als elektrisch betätigbares Betätigungselement ausgebildet. Dabei kann das elektrisch betätigbare Betätigungselement vorteilhaft einen über einen Elektromagneten betätigbares Pneumatikventil aufweisen. Dies hat den Vorteil, dass infolge einer Druckluftunterstützung des Betätigungsvorgangs die Elektromagnet-Anordnung relativ kompakt ausgelegt werden kann und demzufolge einen relativ geringen elektrischen Energiebedarf hat.

Gemäß einer vorteilhaften Weiterbildung der Erfindung weist das elektrisch betätigbare Betätigungselement für die Senken-Stellung und für die Heben-Stellung jeweils einen separaten Elektromagneten mit einem diesem zugeordneten, von dem Elektromagneten betätigbaren Pneumatikventil auf. Gemäß einer weiteren vorteilhaften Weiterbildung ist die Entriegelungseinrichtung derart mit den beiden Elektromagneten bzw. den durch sie betätigbaren Pneumatikventilen gekoppelt, dass bereits bei der Betätigung eines der Elektromagneten die Entriegelungseinrichtung betätigt wird und hierdurch die Rasteinrichtung entriegelt. Hierdurch wird sozusagen eine logische Oder-Verknüpfung der Heben- und der Senken-Anforderung an dem elektrisch betätigbaren Betätigungselement realisiert.

In einer vorteilhaften Ausführungsform der Erfindung ist die Verknüpfung im pneumatischen Teil der Ventileinrichtung durch ein Doppelrückschlagventil realisiert, das die Drucksignale des ersten und des zweiten Pneumatikventils des elektrisch betätigbaren Betätigungselements zu einem ausgangsseitigen Drucksignal zur Betätigung der Entriegelungseinrichtung verknüpft. Hierbei ist das Doppelrückschlagventil eingangsseitig mit dem ersten und dem zweiten Pneumatikventil verbunden, ausgangsseitig führt ein Druckluftkanal von dem Doppelrückschlagventil zu einer ersten Druckluftkammer, über die ein erster Entriegelungskolben der Entriegelungseinrichtung mit Druckluft beaufschlagbar ist.

Gemäß einer vorteilhaften Ausführungsform der Erfindung ist statt des Doppelrückschlagventils ein zweiter Entriegelungskolben der Entriegelungseinrichtung vorgesehen, der über eine zweite Druckluftkammer mit Druckluft beaufschlagbar ist. Hierbei kann die erste Druckluftkammer mit dem einem Pneumatikventil des elektrisch betätigbaren Betätigungselements verbunden werden, die zweite Druckluftkammer mit dem anderen Pneumatikventil. Hierdurch ist ebenfalls die erwähnte logische Oder-Verknüpfung bei gleichzeitiger Trennung der Druckluftkreise möglich.

Gemäß einer weiteren vorteilhaften Ausführungsform ist die Entriegelungseinrichtung über elektrische Anschlüsse elektrisch betätigbar. Ein elektrischer Anschluss der Entriegelungseinrichtung ist mit den elektrischen Anschlüssen des elektrisch betätigbaren Betätigungselements derart verkoppelt, dass die Entriegelungseinrichtung bei einer Betätigung des nicht-manuellen Betätigungselements betätigt wird und hierdurch die Rasteinrichtung entriegelt. Die Verkopplung der elektrischen Anschlüsse erfolgt vorteilhaft derart, dass die logische Oder-Verknüpfung der Heben-und der Senken-Anforderung realisiert wird, zum Beispiel durch ein Logikgatter oder eine Verbindung über Dioden, wie im Ausführungsbeispiel näher erläutert.

Es ist auch vorteilhaft, stattdessen eine direkte elektrische Verbindung zwischen einer elektronischen Steuereinrichtung und einem elektrischen Anschluss der Entriegelungseinrichtung vorzusehen. In diesem Fall kann die elektronische Steuereinrichtung über geeignete Software-Algorithmen eine Entriegelung der Rasteinrichtung zu einem gewünschten Zeitpunkt durchführen. Insbesondere kann die elektronische Steuereinrichtung hierbei die Informationen weiterer Sensoren, wie zum Beispiel eines Fahrgeschwindigkeitssensors, berücksichtigen, um so zu einem sachgerechten Zeitpunkt eine Entriegelung der Rasteinrichtung durchzuführen.

Es zeigen
- Fig. 1: eine zweikreisige Luftfederungsanlage in schematischer Darstellung unter Verwendung der erfindungsgemäßen Ventileinrichtung und
- Fig. 2: die erfindungsgemäße Ventilanordnung in Schnittdarstellung und
- Fig. 3 bis 6: verschiedene Ausführungsformen der erfindungsgemäßen Ventileinrichtung in Schnittdarstellung.

In den Figuren werden gleiche Bezugszeichen für einander entsprechende Teile verwendet.

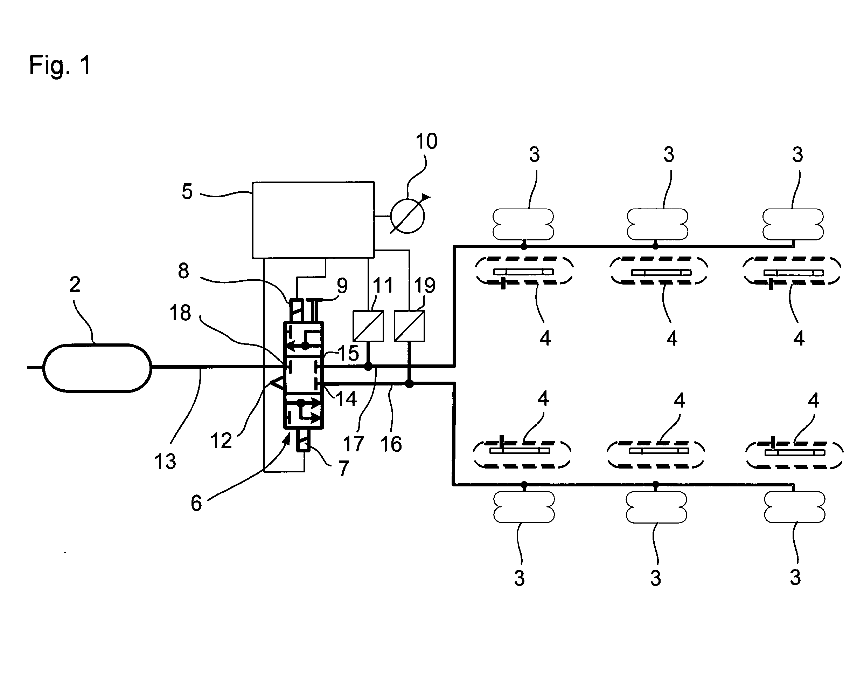

Fig. 1 zeigt in schematischer Darstellung den Aufbau einer zweikreisigen Luftfederungsanlage in einem dreiachsigen Fahrzeug. Das Fahrzeug weist Räder (4) auf, die paarweise an jeweiligen Fahrzeugachsen angeordnet sind. Der Fahrzeugaufbau ist über Luftfederbälge (3) gegenüber den Fahrzeugachsen gefedert. Die Luftfederbälge (3) sind jeweils in der Nähe der Radaufhängung der Räder (4) angeordnet. Über die Luftfederbälge (3) kann die Niveaulage des Fahrzeugaufbaus gegenüber den Rädern (4) in bestimmten Grenzen verändert werden. Die Luftfederungsanlage gemäß Fig. 1 ist zweikreisig ausgebildet, d.h. sie weist einen Druckluftkreis für die rechte Fahrzeugseite und einen weiteren Druckluftkreis für die linke Fahrzeugseite auf. Die Druckluftkreise weisen je drei Luftfederbälge (3) auf, die an jeweilige pneumatische Leitungen (16, 17) angeschlossen sind. Die Leitungen (16, 17) sind mit pneumatischen Anschlüssen (14, 15) einer Ventileinrichtung (6) der erfindungsgemäßen Art verbunden. Ein pneumatischer Anschluss (18) der Ventileinrichtung (6) ist wiederum über eine pneumatische Leitung (13) mit einem Druckluftvorrat verbunden. Der Druckluftvorrat ist im Ausführungsbeispiel der Fig. 1 als Druckluft-Vorratsbehälter (2) dargestellt. Bei Fahrzeugen mit eigener Druckluftversorgung ist der Druckluft-Vorratsbehälter (2) üblicherweise noch mit der Druckluftversorgungsanlage, d. h. mit einem Kompressor, einem Lufttrockner und einem Mehrkreisschutzventil, verbunden.

Die Ventileinrichtung (6) weist ferner einen Entlüftungsanschluss (12) auf, über den Druckluft in die Atmosphäre entlassen werden kann.

Die Ausführung der Luftfederungsanlage als zweikreisige Anlage hat den Vorteil, dass die Wankstabilität des Fahrzeugs erhöht werden kann, da Ausgleichsströmungen der Druckluft zwischen der linken und der rechten Fahrzeugseite verhindert werden.

Die Ventileinrichtung (6) ist durch elektrische Betätigungssignale über Magnetventile (7, 8) betätigbar. Zusätzlich ist die Ventileinrichtung (6) über ein manuelles Bedienelement (9) betätigbar. Die Magnetventile (7, 8) sind über elektrische Leitungen mit einer elektronischen Steuereinrichtung (5) verbunden.

Die elektronische Steuereinrichtung (5) dient zur automatischen, elektronisch gesteuerten Niveauregelung des Fahrzeugaufbaus. Zu diesem Zweck ist an die elektronische Steuereinrichtung (5) ein Wegsensor (10) angeschlossen, der üblicherweise am Fahrzeugrahmen, der Teil des Fahrzeugaufbaus ist, montiert ist und über einen mechanischen Sensierarm den jeweiligen Abstand zum Fahrwerk, d. h. zu den Achsen des Fahrzeugs, sensiert. Des Weiteren sind zwei Drucksensoren (11, 19) mit der elektronischen Steuereinrichtung (5) verbunden. Die Drucksensoren (11, 19) sind pneumatisch mit den Leitungen (16, 17) verbunden und sensieren den Druck in den zwei Druckluftkreisen der Luftfederungsanlage. Die Sensoren (10, 11, 19) geben die sensierten Informationen als elektrische Signale an die elektronische Steuereinrichtung (5) ab, die diese Signale verarbeitet und hieraus gemäß vorgegebenen Algorithmen entsprechende Ansteuersignale für die Magnetventile (7, 8) erzeugt.

Die elektronische Steuereinrichtung (5) kann beispielsweise ein ABS- (Anti-Blockier-System) oder EBS- (Elektronisch gesteuertes Bremssystem) Steuergerät sein. Das Steuergerät (5) ist dann über elektrische Leitungen mit Drehgeschwindigkeitssensoren verbunden, die in der Nähe der Räder (4) angeordnet sind und die Drehgeschwindigkeiten der Räder (4) erfassen. Das Steuergerät (5) wertet diese Drehgeschwindigkeitssignale aus.

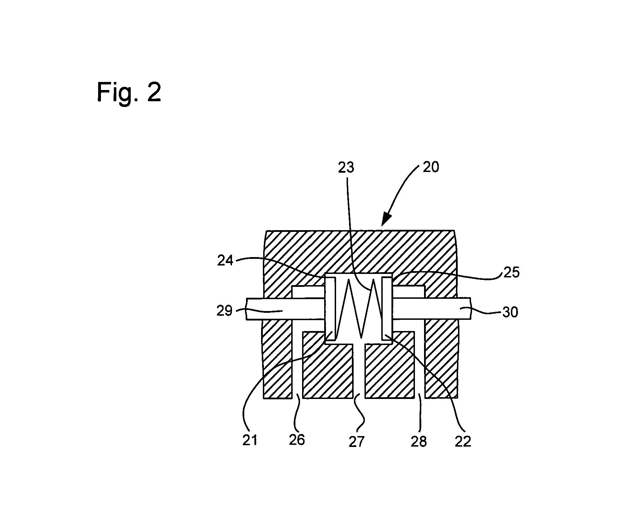

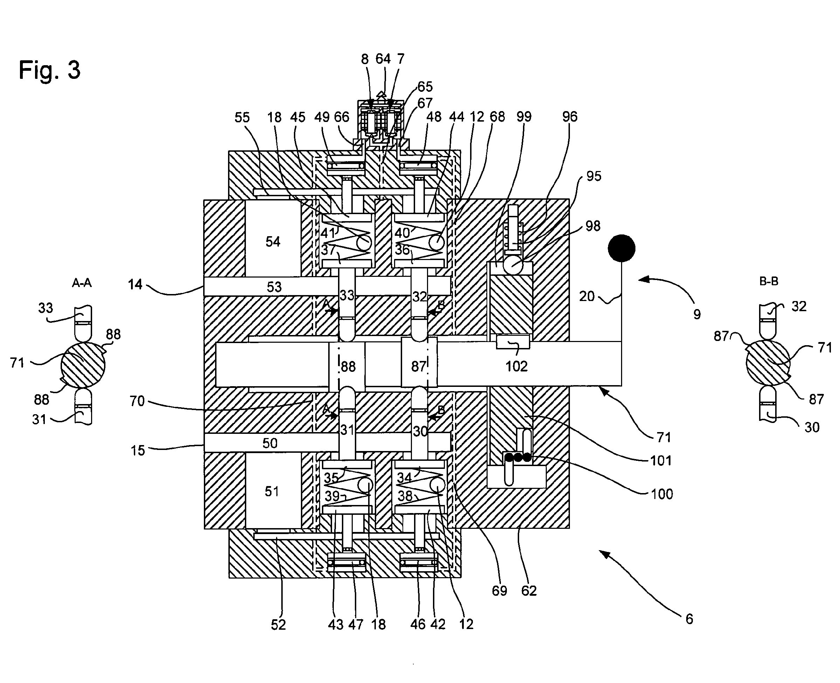

Die Ventileinrichtung (6) dient einerseits zur Regelung und Konstanthaltung des Fahrzeugniveaus im Rahmen der elektronischen Niveauregelung durch die elektronische Steuereinrichtung (5). Die Ventileinrichtung (6) dient außerdem einer manuellen Veränderung der Niveaulage des Fahrzeugs, die von der durch die elektronische Steuereinrichtung (5) vorgegebenen Soll-Niveaulage abweicht. Eine solche manuelle Veränderung ist beispielsweise beim Be- oder Entladen des Fahrzeuges an einer Laderampe erforderlich. Für die manuelle Veränderung der Niveaulage ist an der Ventileinrichtung (6) ein Bedienelement (9) vorgesehen. Das Bedienelement (9) kann beispielsweise als Betätigungshebel einer Ventileinrichtung mit Drehbetätigung (gemäß Fig. 3) oder als Bedienknopf (gemäß Fig. 2) ausgestaltet sein. Das Bedienelement (9) gemäß Fig. 1 symbolisiert daher alle Arten manueller Bedienelemente.

Die Ventileinrichtung (6) kann manuell und mittels elektrischer Betätigung in die Stellungen Heben, Senken und Neutral gestellt werden. Mit dem Begriff "Stellung" wird im Rahmen dieser Patentanmeldung die Stellung, d.h. die Funktion, der Ventileinrichtung (6) bezeichnet. Mit der eingestellten Position des Bedienelements (9) korrespondieren bestimmte Stellungen der Ventileinrichtung (6), wobei je nach Ausführungsart für das Bedienelement (9) bestimmte weitere Positionen vorgesehen sein können.

In der Stellung Heben wird Druck aus dem Druckluft-Vorratsbehälter (2) in die Luftfederbälge (3) geleitet. In der Stellung Senken (18) wird Luft aus den Luftfederbälgen (3) über den Entlüftungsanschlss (12) in die Atmosphäre entlassen. In der Stellung Neutral (19) erfolgt keine Änderung der Druckluftmenge in den Luftfederbälgen (3).

In der Fig. 2 ist eine vorteilhafte Ausführungsform der Erfindung schematisch in Schnittdarstellung gezeigt. Eine Ventilanordnung (200) weist ein erstes Sitzventil (21, 24) sowie ein zweites Sitzventil (22, 25) auf. Die Sitzventile sind vorteilhaft als Plattenventile ausgebildet. Das erste Sitzventil weist einen durch eine Gehäusekante gebildeten Ventilsitz (24) sowie einen als Ventilplatte ausgebildeten Ventilschließkörper (21) auf. Analog dazu weist das zweite Sitzventil einen von einer weiteren Gehäusekante (25) gebildeten Ventilsitz (25) sowie einen in Plattenform ausgebildeten Ventilschließkörper (22) auf. Die Längsachsen der Ventilschließkörper (21, 22) fluchten im Wesentlichen miteinander.

In der in der Fig. 2 dargestellten Position sind das erste und das zweite Sitzventil geschlossen. Zwischen der dem Ventilsitz (24) abgewandten Seite des Ventilschließkörpers (21) und der dem Ventilsitz (25) abgewandten Seite des Ventilschließkörpers (22) ist eine gemeinsame Feder (23) angeordnet, die im vorliegenden Ausführungsbeispiel als Druckfeder ausgebildet ist und infolge einer Vorspannung eine Kraft auf die Ventilschließkörper (21, 22) in Schließrichtung ausübt.

Die Ventilanordnung weist als mechanische Betätigungseinrichtung einen ersten Stößel (29) sowie einen zweiten Stößel (30). Das erste Sitzventil (21, 24) kann durch den mit dem Ventilschließkörper (21) mechanisch gekoppelten ersten Stößel (29) in eine geöffnete Position bewegt werden, in der das Sitzventil einen Druckmittelfluss zwischen Druckmittelkanälen (26, 27) freigibt. Der erste Stößel (29) kann beispielsweise manuell, pneumatisch über einen Kolben, direkt über einen Elektromagneten oder elektropneumatisch über ein Magnetventil betätigt werden. Analog dazu ist das zweite Sitzventil (22, 25) über einen zweiten Stößel (30) in die geöffnete Stellung stellbar, in der es einen Druckmittelfluss zwischen Druckmittelleitungen (27, 28) freigibt. Der zweite Stößel 30 kann in vergleichbarer Weise wie der erste Stößel (29) angetrieben werden.

In der Fig. 3 ist eine erfindungsgemäße Ventileinrichtung (6) für eine Luftfederungsanlage der anhand der Fig. 1 beschriebenen Art dargestellt. In der Ventileinrichtung (6) kommt die anhand der Fig. 2 beschriebene Ventilanordnung vierfach zum Einsatz. Eine erste Verwendung der Ventilanordnung weist Ventilschließkörper (34, 42), eine Feder (38) sowie einen Stößel (30) auf. Eine zweite Verwendung der Ventilanordnung weist Ventilschließglieder (35, 43), eine Feder (39) sowie einen Stößel (31) auf. Eine dritte Verwendung der Ventilanordnung weist Ventilschließkörper (36, 44), eine Feder (40) sowie einen Stößel (32) auf. Eine vierte Verwendung der Ventilanordnung weist Ventilschließkörper (37, 45), eine Feder (41) sowie einen Stößel (33) auf. In der ersten Verwendung ist der Ventilschließkörper (42) über einen mit Druckluft beaufschlagbaren Kolben (46) über einen Stößel betätigbar. Der Ventilschließkörper (43) in der zweiten Verwendung ist über einen Druckluft betätigbaren Kolben (47) betätigbar. Der Ventilschließkörper (44) in der dritten Verwendung ist über einen Kolben (48) betätigbar. Der Ventilschließkörper (45) in der vierten Verwendung ist mittels eines Druckluft betätigbaren Kolbens (49) über einen Stößel betätigbar.

Die Kolben (46, 48) sind über Druckluftkanäle (67, 69) mit dem Magnetventil (7) verbunden. Das Magnetventil (7) ist als elektromagnetisch betätigbares 3/2-Wege-Pneumatikventil ausgebildet. Je nach Schaltstellung lässt es über einen Druckluftkanal (65) Druckluft aus dem Vorratsbehälter (2) in die Druckluftkanäle (67, 69) strömen, was eine Druckluftbetätigung der Kolben (46, 48) und infolge dessen ein Öffnen der Ventilschließkörper (42, 44) zur Folge hat. In seiner zweiten Stellung verbindet das Ventil (7) die Druckluftkanäle (67, 69) mit einem Entlüftungsanschluss (64). In dieser Stellung wird eine etwaige Druckluftbeaufschlagung der Kolben (46, 48) aufgehoben und infolge dessen aufgrund der Rückstellkraft der Federn (38, 40) die Ventilschließkörper (42, 44) gegen ihre jeweiligen Ventilsitze gepresst, sodass die Sitzventile in der geschlossenen Position sind.

Die Kolben (47, 49) sind über Druckluftkanäle (66, 67, 70) mit dem Magnetventil (8) verbunden. Das Magnetventil (8) ist als elektromagnetisch betätigbares 3/2-Wege-Pneumatikventil ausgebildet und erfüllt die gleiche Funktion wie das Magnetventil (7), nur im Bezug auf die Kolben (47, 49).

Die Ventilschließkörper (36, 44, 37, 45) sind über Druckmittelkanäle (53, 54, 55) an ihrer dem jeweiligen Ventilsitz zugewandten Seite mit dem Anschluss (14) der Ventileinrichtung (6) verbunden. Die zwischen den Ventilplatten (36, 44) vorgesehene Kammer ist über einen Druckluftkanal (68) mit dem Entlüftungs-Anschluss (12) der Ventileinrichtung (6) verbunden. Die zwischen den Ventilschließkörpern (37, 45) gebildete Kammer ist mit dem Druckluft-Anschluss (18) der Ventileinrichtung (6) verbunden. Ein Öffnen eines der Ventilschließkörper (36, 44) bewirkt einen Druckmittelabfluss aus den Luftfederbälgen (3) des einen Druckluftkreis-Anschlusses (14) über den Anschluss (12) in die Atmosphäre. Ein Öffnen eines der Ventilschließkörper (37, 45) bewirkt einen Druckluftzufluss in die Luftfederbälge (3) des Druckluftkreis-Anschlusses (14) aus dem Druckluft-Vorratsbehälter (2).

Die den Ventilsitzen zugewandten Seiten der Ventilschließkörper (34, 42, 35, 43) sind über Druckluftkanäle (50, 51, 52) mit dem Balganschluss (15) der Ventileinrichtung (6) verbunden. Die zwischen den Ventilschließkörpern (34, 42) gebildete Kammer ist über in der Ventileinrichtung (6) vorgesehene Druckmittelkanäle mit dem Entlüftungsanschluss (12) der Ventileinrichtung (6) verbunden. Die zwischen den Ventilschließkörpern (35, 43) gebildete Kammer ist über weitere Druckmittelkanäle mit dem Druckmittel-Vorratsanschluss (18) der Ventileinrichtung (6) verbunden. Ein Öffnen eines der Ventilschließkörper (34, 42) bewirkt eine Druckverminderung, der mit dem Anschluss (15) verbundenen Luftfederbälge infolge eines Abflusses der Druckluft über den Entlüftungsanschluss (12) in die Atmosphäre. Analog dazu bewirkt ein Öffnen eines Ventilschließkörper (35, 43) eine Druckerhöhung in den mit dem Anschluss (15) verbundenen Luftfederbälgen über den Druckluft-Anschluss (18) von dem Druckluft-Vorrat (2). Bei einer elektrischen Betätigung der Ventileinrichtung (6) dient das Magnetventil (8) als Einlassventil, d. h. eine Betätigung des Magnetventils (8) führt zu einer Druckerhöhung in den Druckluftleitungen (14, 15) bzw. (16, 17) der Fig.1. Das Magnetventil (7) dient als Auslassventil. Seine Betätigung führt zur Druckverminderung an den Anschlüssen (14, 15) bzw. in den Druckluftleitungen (16, 17) der Fig.1.

Die Ventileinrichtung (6) weist ferner ein manuelles Bedienelement (9) auf, das einen Bedienhebel (20) umfasst. Der Bedienhebel (20) ist mit einer in einer Bohrung der Ventileinrichtung (6) angeordneten Achse (71) drehfest verbunden. Die Achse (71) steht über eine Passfeder (102) mit einer federbetätigten Rückstelleinrichtung drehfest in Verbindung. Die Rückstelleinrichtung weist eine Scheibe (101) auf, die mit einer Feder (100) in Eingriff steht. Die Feder (100) ist an ihrem anderen Ende mit dem Gehäuse (62) der Ventileinrichtung (6) verbunden. Die Rückstelleinrichtung (101, 100) bewirkt eine automatische Rückstellung des manuellen Bedienelements (9) in eine Neutrallage, in der die Ventileinrichtung (6) die Stellung Neutral (19) einnimmt.

Die Achse (71) weist Nocken (87, 88) auf, mittels denen bei entsprechender Betätigung des manuellen Bedienelements (9) wahlweise die Stößel (33, 31) oder die Stößel (32, 30) betätigbar sind. Durch eine Betätigung der Stößel (33, 31) werden die Ventilschließkörper (37, 35) in die geöffnete Position verbracht. Hierdurch werden die mit den Anschlüssen (14, 15) verbundenen Luftfederbälge mit Druckluft-Vorrat bzw. dem Anschluss (18) verbunden, was zu einem Erhöhen des Fahrzeugaufbaus führt. In einer gegenüberliegenden Stellung werden durch die Nocken (87, 88) die Stößel (32, 30) betätigt. Hierdurch öffnen sich die Ventilschließkörper (36, 34) und geben die Druckmittelkanäle zu den Luftfederbälgen zur Atmosphäre bzw. dem Anschluss (12) frei. Hierdurch wird der Aufbau des Fahrzeugs abgesenkt. Die exzentrische Ausbildung der Nocken (87,88) ist in den Schnittdarstellungen A-A und B-B ersichtlich, worin sich der bei Drehbewegung der Achse (71) vergrößernde Durchmesser der Nocken (87, 88) zur Betätigung der Stößel (31, 33) bzw. (30, 32) deutlich zeigt.

Wie erkennbar ist, kann sowohl durch eine manuelle Betätigung über das manuelle Bedienelement (9) wie auch durch die Betätigung über die eine Betätigungseinheit bildenden Magnetventile (7, 8) ein Heben und Senken des Fahrzeugaufbaus bewirkt werden. Das manuelle Bedienelement (9) kann die Stellungen Heben, Senken und Neutral einnehmen.

Des Weiteren ist eine Rasteinrichtung (90) vorgesehen, die ein Einrasten der Achse (71) und damit des manuellen Bedienelements (9) in vorbestimmten Positionen erlaubt. Die Rasteinrichtung (90) weist eine Rastkugel (98) auf, die in einer Nut (99) der Scheibe (101) zur Anlage gebracht wird. In Folge des Einrastens der Rastkugel (98) in der Nut (99) wird eine Drehbewegung der Achse (71) verhindert.

Die Rastkugel (98) ist auf der der Nut (99) abgewandeten Seite von einem Druckstempel (95), der durch eine Feder (96) gegenüber der Rastkugel (98) vorgespannt ist, beauftschlagt. Die Haltekraft der Rasteinrichtung (90) ist durch geeignete Abstimmung der Feder (96), der Formgebung der Nut (99) sowie der Feder (100) der Rückstelleinrichtung derart dimensioniert, dass das manuelle Bedienelement (9) im praktischen Betrieb der Ventileinrichtung (6) sicher in der eingerasteten Stellung gehalten wird, andererseits die Rastierung aber durch manuelle Betätigung des Bedienelements (9) mit etwas erhöhtem Kraftaufwand überwindbar ist, so dass das Bedienelement (9) in die anderen Betriebsstellungen stellbar ist. Hierdurch kann die Rastwirkung der Rasteinrichtung (90) aufgehoben werden und die Achse (71) gegenüber Drehbewegung freigegeben werden.

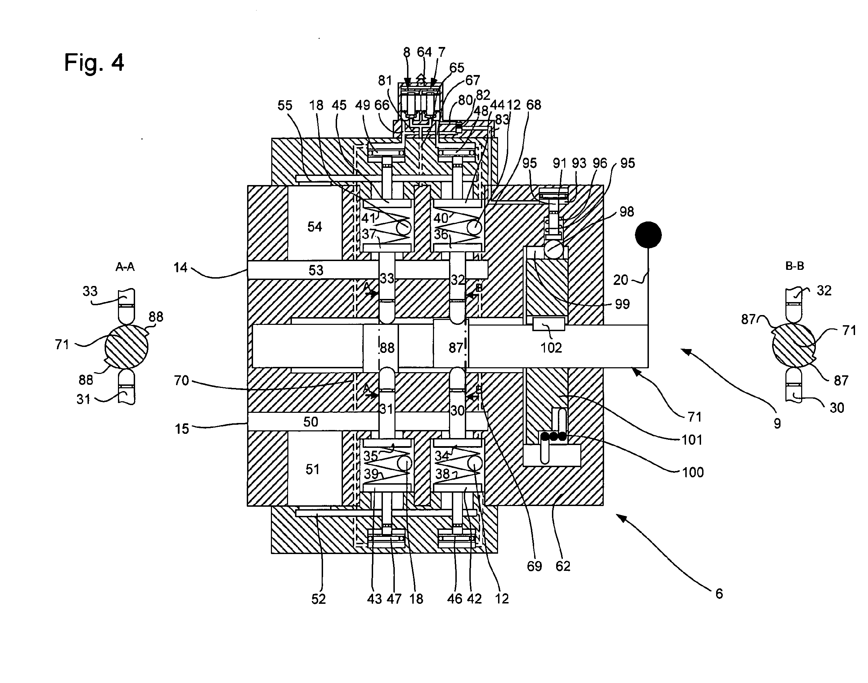

In der Fig. 4 ist eine weitere Ausführungsform der erfindungsgemäßen Ventileinrichtung (6) beschrieben. Nachfolgend werden nur die gegenüber der Fig. 3 geänderten Bestandteile der Ventileinrichtung beschrieben.

Als Entriegelungseinrichtung ein mit Druckluft beaufschlagbarer Kolben (91) vorgesehen, der mit dem Druckstempel (95) ist auf der Rastkugel (98) abgewandten Seite verbunden ist. Eine Druckluftbeaufschlagung des Kolbens (91) bewirkt eine Bewegung des Stempels (95) von der Rastkugel (98) weg, entgegen der Kraft der Feder (96). Hierdurch kann die Rastwirkung der Rasteinrichtung (90) aufgehoben werden und die Achse (71) gegenüber Drehbewegung freigegeben werden.

Die zur Druckluftbeaufschlagung des Kolbens (91) dienende Druckluftkammer (93) ist über einen Druckluftkanal (83) mit einem Doppelrückschlagventil (82) verbunden. Das Doppelrückschlagventil (82) ist wiederum über Druckluftkanäle (80, 81) mit den Druckluftkanälen (66, 67) der Magnetventile (7, 8) derart verbunden, dass bei einer Betätigung eines der Magnetventile (7, 8) der Kolben (91) mit Druckluft beaufschlagt wird und demzufolge die Rastwirkung der Rasteinrichtung (90) aufhebt. Über das Doppelrückschlagventil (82) wird eine Aufhebung der Rastwirkung der Rasteinrichtung (90) ermöglicht, wenn wenigstens eines der beiden Magnetventile (7, 8) betätigt ist.

Dies hat den Vorteil, dass ein Konflikt zwischen dem über das manuelle Bedienelement (9) und dem über die Betätigungseinheit (7, 8) ausgewählten Schaltzustand der Ventileinrichtung vermieden wird. Als Konflikt wird in diesem Zusammenhang verstanden, wenn über das eine Betätigungselement die Funktion "Heben" gewünscht wird, während über das andere Betätigungselement die Funktion "Senken" gewünscht wird.

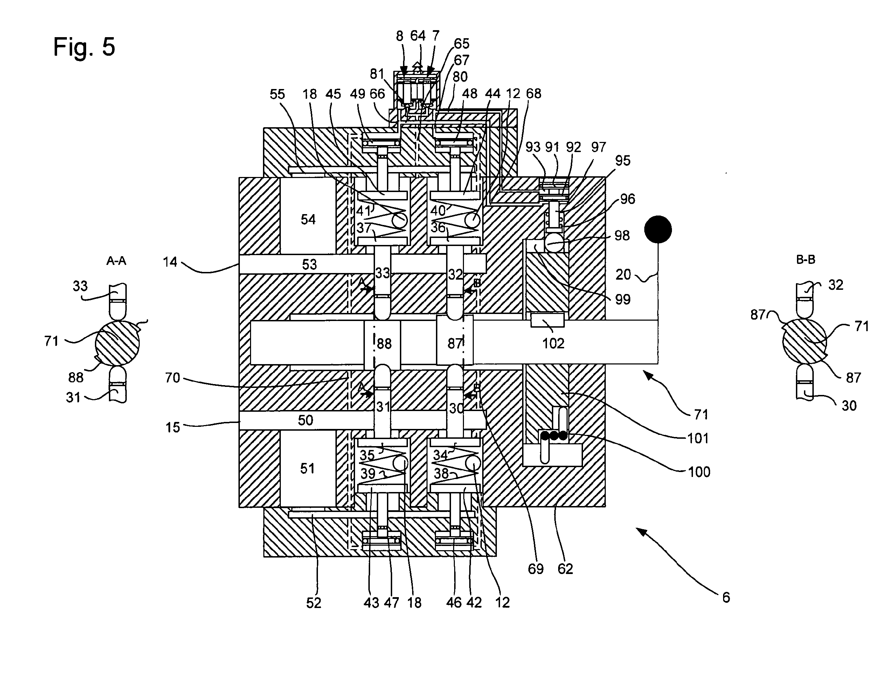

Die Fig. 5 zeigt eine weitere Ausführungsform der erfindungsgemäßen Ventileinrichtung (6). Im Vergleich zur Fig. 4 ist hier zur Entriegelung der Rasteinrichtung (90) eine Anordnung von zwei Kolben (91, 92) vorgesehen, die über jeweilige Druckluftkammern (93, 97) mit Druckluft betätigbar sind. Die Druckluftkammern (93, 97) der Kolben (91, 92) stehen über Druckmittelkanäle (80, 81) mit den Magnetventilen (7, 8) in der zuvor erläuterten Art in Verbindung. Durch die Verwendung zweier miteinander verbundener Kolben (91, 92), die beide auf den Stempel (95) wirken, ist eine Entkopplung der Druckluftkreise der Magnetventile (7, 8) möglich, ohne dass ein Doppelrückschlagventil gemäß Fig. 4 erforderlich ist. Auf diese Weise kann mit geringerem Aufwand, nämlich unter Vermeidung des Doppelrückschlagventils (82), die Funktion realisiert werden, das bereits bei Betätigung eines der Magnetventile (7, 8) eine Aufhebung der Rastwirkung der Rasteinrichtung (90) erfolgt.

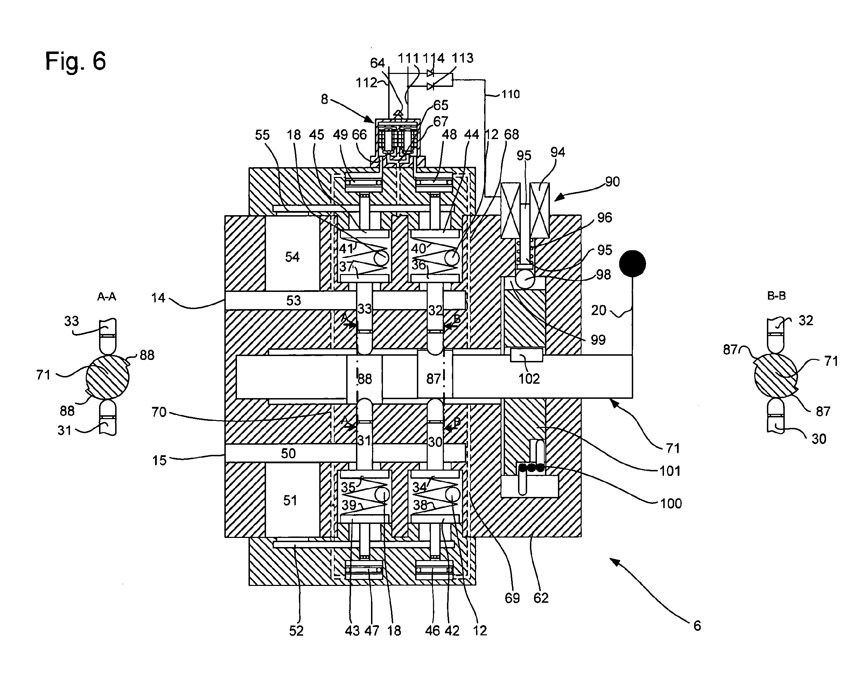

In einer weiteren in der Fig. 6 dargestellten Ausführungsform der erfindungsgemäßen Ventileinrichtung (6) ist zur Entriegelung der Rasteinrichtung (90) eine elektrische Spule (94) vorgesehen, die zusammen mit einem Teil des Stempels (95) eine Elektromagnetanordnung bildet, wobei der im Wirkungsbereich elektrischen Spule (94) liegende Teil des Stempels (95) als Anker der Elektromagnetanordnung wirkt.

In der Ausführungsform gemäß Fig. 6 ist eine Entriegelung der Rasteinrichtung durch direkte elektrische Beaufschlagung der Spule (94) über eine elektrische Leitung (110) möglich. Die zuvor erläuterte vorteilhafte Funktion, dass eine Entriegelung der Rasteinrichtung (90) bereits bei Betätigung nur eines der Magnetventile (7, 8) erfolgt, kann gemäß Fig. 6 vorteilhaft durch eine Verbindung der elektrischen Leitung (110) über eine erste Diode (113) mit einer elektrischen Leitung (111) sowie einer zweiten Diode (114) mit einer zweiten elektrischen Leitung (112) ermöglicht werden. Die elektrischen Leitungen (111, 112) dienen zum Anschluss der Magnetventile (7, 8) an die elektronische Steuereinrichtung (5).

Es ist auch vorteilhaft, statt der Dioden (113, 114) eine direkte elektrische Verbindung zwischen der elektronischen Steuereinrichtung (5) und der Leitung (110) vorzusehen. In diesem Fall kann die elektronische Steuereinrichtung (5) aufgrund einprogrammierter Software-Algorithmen eine Entriegelung der Rasteinrichtung (90) durchführen.

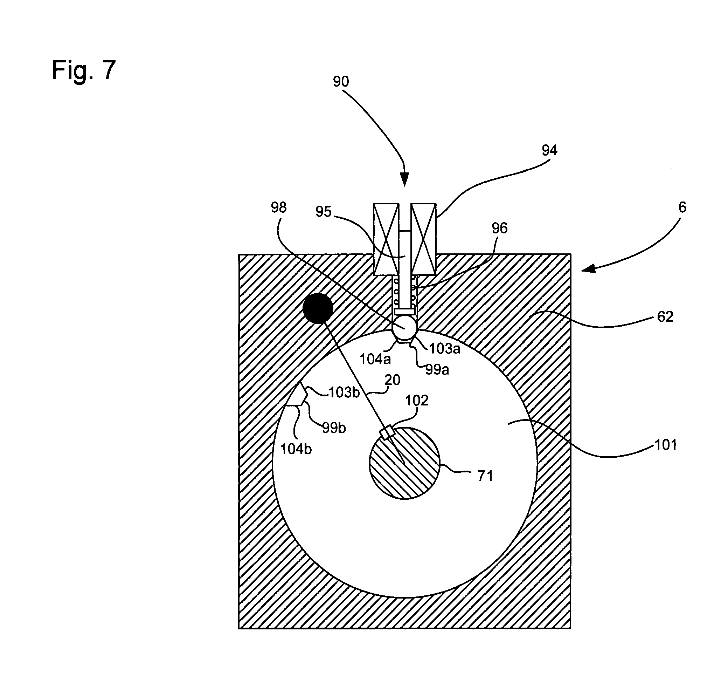

In der Ausführungsform gemäß Fig. 7 ist eine Schnittdarstellung durch die Rasteinrichtung 6 insbesondere der Figuren 3, 4, 5 und 6 gezeigt. Das Gehäuse 62 der Ventileinrichtung 6 weist eine Rasteinrichtung 90, eine Scheibe 101, eine Achse 71 und einen Bedienhebel 20 auf. Der Bedienhebel 20 und die Achse 71 sind über eine Passfeder 102 drehfest verbunden. Die Rasteinrichtung 90 weist eine elektrische Spule 94, einen Druckstempel 95, eine Feder 96 und eine Rastkugel 98 auf. Die Feder 96 stützt sich einerseits an dem Gehäuse 62 oder an der elektrischen Spule 94 bzw. der Rasteinrichtung 90 und andererseits an dem Druckstempel 95 ab, so dass der Druckstempel 95 die Rastkugel 98 in axialer Richtung in Richtung der Achse 71 bewegt und/oder drückt. Die Rastkugel 98 stütz sich an der Oberfläche der Scheibe 101 ab.

Soweit die Scheibe 101 eine Nut 99a, 99b aufweist, wird die Rastkugel 98 von der Feder 96 und dem Druckstempel 95 zumindest teilweise in die Nut 99a, 99b gedrückt und dort fixiert. Durch das zumindest teilweise Eingreifen der Rastkugel 98 in die Nut 99a, 99b wird eine freie Drehbewegung des Bedienhebels 20, der Achse 71 und der Scheibe 101 gegenüber dem Gehäuse 62 verhindert bzw. unterbunden. Durch eine Beaufschlagung der elektrischen Spule mit entsprechender Spannung und entsprechendem Strom, kann der Druckstempel 95 entgegen der Kraft der Feder 96 in axialer Richtung von der Achse 71 weg bewegt werden, so dass die Rastkugel 98 aus der Nut 99a, 99b austritt und eine Drehbewegung der Scheibe 101, der Achse 71 und der Bedienhebels 20 ermöglicht. Um den Bedienhebel 20 in die Neutralstellung zu bewegen, ist die in dieser Darstellung nicht gezeigte Drehfeder 100 vorhanden.

In diesem Ausführungsbeispiel sind eine erste Nut 99a für eine erste Rastposition der Scheibe 101 und eine zweite Nut 99b für eine zweite Rastposition der Scheibe 101 vorhanden. Es ist aber auch möglich weitere Nuten in der Scheibe anzuordnen, z.B. eine mit der Neutralstellung korrespondierende Nut. Die erste Nut 99a weist eine erste abgeschrägte Seitenfläche 103a und eine zweite abgeschrägte Seitenfläche 104a auf, welche eine gleitende Bewegung der Rastkugel 98 auf der Scheibe 101 ermöglichen und eine sprunghafte Verschiebung der Rastkugel in die erste Nut 99a oder aus der ersten Nut 99a vermeiden. Die zweite Nut 99b weist eine erste abgeschrägte Seitenfläche 103b und eine zweite abgeschrägte Seitenfläche 104b auf, welche eine gleitende Bewegung der Rastkugel 98 auf der Scheibe 101 ermöglichen und eine sprunghafte Verschiebung der Rastkugel in die zweite Nut 99b oder aus der zweiten Nut 99b vermeiden. Die abgeschrägten Seitenflächen 103a, 104a bzw. 103b, 104b verbessern die Justierung in die entsprechende Nut 99a bzw. 99b und verbessern auch den gleitenden Austritt aus der entsprechenden Nut 99a bzw. 99b.

## Patentansprüche

1. Ventileinrichtung (6) für eine Luftfederungsanlage in einem Fahrzeug, wobei die Ventileinrichtung
a) Anschlüsse (14, 15, 18) für einen Luftfederbalg (3) der Luftfederungsanlage sowie für einen Druckluftvorrat aufweist,
b) einen mit der Atmosphäre verbundenen Entlüftungsanschluss (12) aufweist,
c) ein manuelles Bedienelement (9, 20) aufweist,
d) ein nicht-manuelles Betätigungselement (7, 8, 46, 47, 48, 49) aufweist,
wobei die Ventileinrichtung (6) sowohl mittels des manuellen Bedienelements (9, 20) als auch mittels des nicht-manuellen Betätigungselements (7, 8, 46, 47, 48, 49) derart verstellbar ist, dass die Anschlüsse (14, 15) für einen Luftfederbalg (3) mit dem Anschluss, (18) für einen Druckluftvorrat oder dem Entlüftungsanschluss (12) verbunden sind, und die ferner
e) eine Rasteinrichtung (90) aufweist, mittels der das manuelle Bedienelement (9, 20) in wenigstens einer Stellung verrastbar ist,
**dadurch gekennzeichnet, dass** die Ventileinrichtung (6) eine Entriegelungseinrichtung (91, 92, 94) zur Entriegelung der Rasteinrichtung (90) aufweist, die derart ausgebildet ist, dass sie bei einer Betätigung des nicht-manuellen Betätigungselements (7, 8, 46, 47, 48, 49) betätigt wird und hierdurch die Rasteinrichtung (90) entriegelt.

2. Ventileinrichtung nach dem vorhergehenden Anspruch, **dadurch gekennzeichnet, dass** das manuelle Bedienelement (9, 20) zumindest in einer Betätigungsrichtung gegen die Kraft einer Rückstellfeder (100) betätigbar ist.

3. Ventileinrichtung nach einem der vorhergehenden Ansprüche, **dadurch gekennzeichnet, dass** die Ventileinrichtung (6) eine Neutral-Stellung aufweist, in der zum Zwecke des Druckhaltens der Luftfederbalg (3) gegenüber dem Entlüftungsanschluss (12) und dem Druckluftvorratsanschluss (18) abgesperrt ist.

4. Ventileinrichtung nach einem der vorhergehenden Ansprüche, **dadurch gekennzeichnet, dass** die Entriegelungseinrichtung (91, 92, 94) einen Elektromagneten (94, 95) aufweist.

5. Ventileinrichtung nach einem der vorhergehenden Ansprüche, **dadurch gekennzeichnet, dass** die Entriegelungseinrichtung (91, 92, 94) einen mit Druckluft betätigbaren Entriegelungskolben (91, 92) aufweist.

6. Ventileinrichtung nach einem der vorhergehenden Ansprüche, **dadurch gekennzeichnet, dass** das nicht-manuelle Betätigungselement (7, 8, 46, 47, 48, 49) ein elektrisch betätigbares Betätigungselement (7, 8) aufweist.

7. Ventileinrichtung nach dem vorhergehenden Anspruch, **dadurch gekennzeichnet, dass** das elektrische betätigbare Betätigungselement (7, 8) ein über einen Elektromagneten betätigbares Pneumatikventil aufweist.

8. Ventileinrichtung nach dem vorhergehenden Anspruch, **dadurch gekennzeichnet, dass** die Entriegelungseinrichtung (91, 92, 94) einen ersten Entriegelungskolben (91), eine zur Druckluftbeaufschlagung des Entriegelungskolbens (91) dienende erste Druckluftkammer (93) sowie einen Druckluftkanal (83) aufweist, wobei der Druckluftkanal (83) die erste Druckluftkammer (93) pneumatisch mit dem Pneumatikventil bzw. den Pneumatikventilen des elektrisch betätigbaren Betätigungselements (7, 8) verbindet.

9. Ventileinrichtung nach dem vorhergehenden Anspruch, **dadurch gekennzeichnet, dass** die Entriegelungseinrichtung (91, 92, 94) einen zweiten Entriegelungskolben (92), eine zweite Druckluftkammer (97) sowie einen weiteren Druckluftkanal (81) aufweist, wobei der Druckluftkanal (81) die zweite Druckluftkammer (97) pneumatisch mit dem Pneumatikventil bzw. den Pneumatikventilen des elektrisch betätigbaren Betätigungselements (7, 8) verbindet.

10. Ventileinrichtung nach einem der Ansprüche 7 oder 8, **dadurch gekennzeichnet, dass** die Entriegelungseinrichtung (91, 92, 94) ein Doppelrückschlagventil (82) aufweist.

11. Ventileinrichtung nach einem der vorhergehenden Ansprüche, **dadurch gekennzeichnet, dass** das nicht-manuelle Betätigungselement (7, 8, 46, 47, 48, 49) sowie die Entriegelungseinrichtung (91, 92, 94) über elektrische Leitungen (110, 111, 112) elektrisch betätigbar sind, wobei die elektrische Leitung (110) der Entriegelungseinrichtung mit den elektrischen Leitungen (111, 112) des nicht-manuellen Betätigungselements (7, 8, 46, 47, 48, 49) derart verkoppelt ist, dass die Entriegelungseinrichtung (91, 92, 94) bei einer Betätigung des nicht-manuellen Betätigungselements (7, 8, 46, 47, 48, 49) betätigt wird und hierdurch die Rasteinrichtung (90) entriegelt.

## Claims

1. Valve device (6) for an air suspension system in a vehicle, the valve device having
a) connectors (14, 15, 18) for an air spring bellows (3) of the air suspension system and for a compressed air supply,
b) a ventilating connector (12) which is connected to atmosphere,
c) a manual operating element (9, 20),
d) a non-manual actuating element (7, 8, 46, 47, 48, 49),
it being possible for the valve device (6) to be adjusted both by means of the manual operating element (9, 20) and by means of the non-manual actuating element (7, 8, 46, 47, 48, 49) in such a way that the connectors (14, 15) for an air spring bellows (3) are connected to the connector (18) for a compressed air supply or the ventilating connector (12),
and which valve device (6) has, furthermore,
e) a latching device (90), by means of which the manual operating element (9, 20) can be latched in at least one position,
**characterized in that** the valve device (6) has an unlocking device (91, 92, 94) for unlocking the latching device (90), which unlocking device (91, 92, 94) is configured in such a way that it is actuated upon actuation of the non-manual actuating element (7, 8, 46, 47, 48, 49) and unlocks the latching device (90) as a result.

2. Valve device according to the preceding claim, **characterized in that** the manual operating element (9, 20) can be actuated at least in an actuating direction counter to the force of a restoring spring (100).

3. Valve device according to either of the preceding claims, **characterized in that** the valve device (6) has a neutral position, in which the air spring bellows (3) is shut off with respect to the ventilating connector (12) and the compressed air supply connector (18) for the purpose of holding the pressure.

4. Valve device according to one of the preceding claims, **characterized in that** the unlocking device (91, 92, 94) has an electromagnet (94, 95).

5. Valve device according to one of the preceding claims, **characterized in that** the unlocking device (91, 92, 94) has an unlocking piston (91, 92) which can be actuated using compressed air.

6. Valve device according to one of the preceding claims, **characterized in that** the non-manual actuating element (7, 8, 46, 47, 48, 49) has an electrically actuable actuating element (7, 8).

7. Valve device according to the preceding claim, **characterized in that** the electrically actuable actuating element (7, 8) has a pneumatic valve which can be actuated via an electromagnet.

8. Valve device according to the preceding claim, **characterized in that** the unlocking device (91, 92, 94) has a first unlocking piston (91), a first compressed r chamber (93) which serves to load the unlocking piston (91) with compressed air, and a compressed air duct (83), the compressed air duct (83) connecting the first compressed air chamber (93) pneumatically to the pneumatic valve or the pneumatic valves of the electrically actuable actuating element (7, 8).

9. Valve device according to the preceding claim, **characterized in that** the unlocking device (91, 92, 94) has a second unlocking piston (92), a second compressed air chamber (97) and a further compressed air duct (81), the compressed air duct (81) connecting the second compressed air chamber (97) pneumatically to the pneumatic valve or the pneumatic valves of the electrically actuable actuating element (7, 8).

10. Valve device according to either of Claims 7 and 8, **characterized in that** the unlocking device (91, 92, 94) has a double check valve (82).

11. Valve device according to one of the preceding claims, **characterized in that** the non-manual actuating element (7, 8, 46, 47, 48, 49) and the unlocking device (91, 92, 94) can be actuated electrically via electrical lines (110, 111, 112), the electrical line (110) of the unlocking device being coupled to the electrical lines (111, 112) of the non-manual actuating element (7, 8, 46, 47, 48, 49) in such a way that the unlocking device (91, 92, 94) is actuated upon actuation of the non-manual actuating element (7, 8, 46, 47, 48, 49) and unlocks the latching device (90) as a result.

## Revendications

1. Ensemble de clapets (6) pour un système de suspension pneumatique dans un véhicule, dans lequel l'ensemble de clapets
a) présente des raccords (14, 15, 18) pour un soufflet d'amortisseur pneumatique (3) du système de suspension pneumatique ainsi que pour un réservoir d'air comprimé,
b) présente un raccord d'évent (12) communicant avec l'atmosphère,
c) présente un élément de commande manuel (9, 20),
d) présente un élément d'actionnement non manuel (7, 8, 46, 47, 48, 49),
dans lequel l'ensemble de clapets (6) est réglable aussi bien au moyen de l'élément de commande manuel (9, 20) qu'au moyen de l'élément d'actionnement non manuel (7, 8, 46, 47, 48, 49), de telle manière que les raccords (14, 15) pour un soufflet d'amortisseur pneumatique (3) soient raccordés au raccord (18) pour un réservoir d'air comprimé ou au raccord d'évent (12), et qui présente en outre
e) un dispositif d'encliquetage (90), au moyen duquel l'élément de commande manuel (9, 20) peut être encliqueté dans au moins une position,
**caractérisé en ce que** l'ensemble de clapets (6) présente un dispositif de déverrouillage (91, 92, 94) pour le déverrouillage du dispositif d'encliquetage (90), qui est configuré de telle manière qu'il soit actionné lors d'un actionnement de l'élément d'actionnement non manuel (7, 8, 46, 47, 48, 49) et qu'il déverrouille de ce fait le dispositif d'encliquetage (90).

2. Ensemble de clapets selon la revendication précédente, **caractérisé en ce que** l'élément de commande manuel (9, 20) peut être actionné au moins dans une direction d'actionnement opposée à la force d'un ressort de rappel (100).

3. Ensemble de clapets selon l'une quelconque des revendications précédentes, **caractérisé en ce que** l'ensemble de clapets (6) présente une position neutre, dans laquelle le soufflet d'amortisseur pneumatique (3) est fermé par rapport au raccord d'évent (12) et au raccord de réservoir d'air comprimé (18), dans le but de maintenir la pression.

4. Ensemble de clapets selon l'une quelconque des revendications précédentes, **caractérisé en ce que** le dispositif de déverrouillage (91, 92, 94) présente un électroaimant (94, 95).

5. Ensemble de clapets selon l'une quelconque des revendications précédentes, **caractérisé en ce que** le dispositif de déverrouillage (91, 92, 94) présente un piston de déverrouillage (91, 92) actionnable à l'air comprimé.

6. Ensemble de clapets selon l'une quelconque des revendications précédentes, **caractérisé en ce que** l'élément d'actionnement non manuel (7, 8, 46, 47, 48, 49) présente un élément d'actionnement actionnable électriquement (7, 8).

7. Ensemble de clapets selon la revendication précédente, **caractérisé en ce que** l'élément d'actionnement actionnable électriquement (7, 8) présente un clapet pneumatique actionnable par un électroaimant.

8. Ensemble de clapets selon l'une quelconque des revendications précédentes, **caractérisé en ce que** le dispositif de déverrouillage (91, 92, 94) présente un premier piston de déverrouillage (91), une première chambre d'air comprimé (93) destinée à l'application d'air comprimé au piston de déverrouillage (91) ainsi qu'un canal d'air comprimé (83), dans lequel le canal d'air comprimé (83) relie la première chambre d'air comprimé (93) pneumatiquement au clapet pneumatique ou aux clapets pneumatiques de l'élément d'actionnement actionnable électriquement (7, 8).

9. Ensemble de clapets selon la revendication précédente, **caractérisé en ce que** le dispositif de déverrouillage (91, 92, 94) présente un deuxième piston de déverrouillage (92), une deuxième chambre d'air comprimé (97) ainsi qu'un autre canal d'air comprimé (81), dans lequel le canal d'air comprimé (81) relie la deuxième chambre d'air comprimé (97) pneumatiquement au clapet pneumatique ou aux clapets pneumatiques de l'élément d'actionnement actionnable électriquement (7, 8).

10. Ensemble de clapets selon l'une quelconque des revendications 7 ou 8, **caractérisé en ce que** le dispositif de déverrouillage (91, 92, 94) présente un clapet antiretour double (82).

11. Ensemble de clapets selon l'une quelconque des revendications précédentes, **caractérisé en ce que** l'élément d'actionnement non manuel (7, 8, 46, 47, 48, 49) ainsi que le dispositif de déverrouillage (91, 92, 94) peuvent être actionnés électriquement via des lignes électriques (110, 111, 112), dans lequel la ligne électrique (110) du dispositif de déverrouillage est couplée aux lignes électriques (111, 112) de l'élément d'actionnement non manuel (7, 8, 46, 47, 48, 49) de telle manière que le dispositif de déverrouillage (91, 92, 94) soit actionné lors d'un actionnement de l'élément d'actionnement non manuel (7, 8, 46, 47, 48, 49) et déverrouille de ce fait le dispositif d'encliquetage (90).
